# EUROPÄISCHE PATENTSCHRIFT

(11) **EP 1 129 127 B1**
(45) Veröffentlichungstag und Bekanntmachung des Hinweises auf die Patenterteilung: **18.08.2004**
(21) Anmeldenummer: 99948925.5
(22) Anmeldetag: 04.10.1999
(51) Int. Cl.: C08J 5/18, C08K 3/34, B32B 27/34

(54) **ZÄHE, DIMENSIONSSTABILE UND TRANSPARENTE FOLIE MIT COPOLYAMIDSCHICHT ENTHALTEND FESTE, NANOSKALIGE FÜLLSTOFFE MIT NUKLEIERENDER WIRKUNG SOWIE DEREN VERWENDUNG ZUR VERPACKUNG VON LEBENSMITTELN**
TOUGH, DIMENSIONALLY-STABLE TRANSPARENT FILM HAVING A COPOLYAMIDE LAYER CONTAINING SOLID NANOSCALE FILLING MATERIALS WITH NUCLEATING EFFECT AND ITS USE FOR PACKAGING FOODSTUFFS
FILM TRANSPARENT, INDEFORMABLE ET TENACE, COMPORTANT UNE COUCHE DE COPOLYAMIDE CONTENANT DES NANOPARTICULES DE CHARGE SOLIDES A EFFET NUCLEANT, ET SON UTILISATION POUR L'EMBALLAGE DE DENREES ALIMENTAIRES

(30) Priorität: 16.10.1998 DE 19847844; 16.10.1998 DE 19847845; 28.07.1999 DE 19935324; 06.08.1999 DE 19937117
(43) Veröffentlichungstag der Anmeldung: 05.09.2001
(73) Patentinhaber: Wipak Walsrode GmbH & Co. KG, 29656 Walsrode (DE)
(72) Erfinder: EGGERS, Holger, D-29664 Walsrode (DE); KASCHEL, Gregor, D-29699 Bomlitz (DE); MÜLLER, Claudia, D-29664 Walsrode (DE); GASSE, Andreas, D-29664 Walsrode (DE); BRANDT, Rainer, D-29664 Walsrode (DE); NEUBAUER, Dieter, D-29699 Bomlitz (DE); EILERS, Bernd, D-29699 Bomlitz (DE)
(74) Vertreter: Kutzenberger, Helga, Dr.
(86) Internationale Anmeldenummer: PCT/EP1999/007326
(87) Internationale Veröffentlichungsnummer: WO 2000/023507

(56) Entgegenhaltungen:
- EP-A- 0 358 415
- EP-A- 0 810 259
- EP-A- 0 818 508
- DE-A- 19 631 348
- DE-A- 19 705 998

## Beschreibung

Die vorliegende Erfindung betrifft eine flexible ein- oder mehrschichtige Folie mit einer Schicht enthaltend teilaromatische Polyamidzusammensetzungen oder Zusammensetzungen mit aliphatischem Copolyamid, die zwischen 10 und 2000 ppm eines nanodispersen Füllstoffs enthält.

Polyamidhaltige Folien kommen in großem Umfang bei der Verpackung von Lebensmitteln zum Einsatz.

Vorteile des Werkstoffes Polyamid sind eine hohe mechanische Festigkeit, eine gute Barriere gegen Sauerstoff, Kohlendioxid und andere unpolare Gase sowie eine hohe Temperaturbeständigkeit und Kratzfestigkeit. Daneben lassen sich polyamidhaltige ungereckte Folien thermisch verformen, d.h. in eine für die Aufnahme eines Füllguts geeignete Form tiefziehen. Folien aus Polyamid sind flexibel und können sich somit den Konturen des Füllguts anpassen. Dies ist beispielsweise bei Vakuumverpackungen wichtig.

Für die Verpackung kommen dabei stets mehrschichtige Folien mit Polyamid als einer festigkeitsbringenden Schicht zum Einsatz. Weitere Schichten sind insbesondere eine Siegelschicht zum sicheren Verschluß der Verpackung, eventuell eine extrem sauerstoffsperrende Schicht sowie haftvermittelnde Schichten zwischen den genannten anderen funktionellen Schichten.

Wichtige Eigenschaften solcher Folien sind eine ansprechende Optik, d.h. ein hoher Glanz sowie eine geringe Trübung: Daneben ist eine hohe mechanische Widerstandskraft, insbesondere in Form eines hohen Widerstands gegenüber einer Zerstörung durch Knicken und Falten, im folgenden als Knickbruchfestigkeit bezeichnet, erforderlich.

Für viele Anwendungen ist daneben ein weiches Verhalten der Folie gewünscht. Dies ist beispielsweise dann der Fall, wenn mehrere aus einer Folie gefertigte Verpackungen in einem Transportkarton zusammengefaßt werden. Im Falle steifer Folien kann es unter diesen Umständen vorkommen, daß Ecken der einen Verpackung benachbarte Packungen durchstoßen.

Die Forderungen nach hoher Knickbruchfestigkeit sowie einer niedrigen Steifigkeit lassen sich als Wunsch nach einem zäh-duktilen Materialverhalten zusammenfassen. Eine geeignete Meßmethode zur quantitativen Bestimmung ist im Zusammenhang mit den Beispielen aufgeführt.

Die Herstellung von Polyamidfolien kann nach dem Flach- oder dem Blasfolienverfahren erfolgen. Das Blasfolienverfahren ist in vielen Fällen bevorzugt, weil es durch Rotation der Folienblase relativ zur Aufwickelstation dieser Folie ohne Schnittverluste einen Versatz von Dick- und Dünnstellen erlaubt. Dadurch läßt sich gegenüber Flachfolien eine bessere Wickelqualität erreichen, die erfahrungsgemäß mit einem besseren Geradeauslauf und einer besseren Planlage der Folie einhergeht.

Ein wesentlicher Nachteil bei der Herstellung von Folien im Blasfolienverfahren ist die Beschränkung auf weiche Folien. So bilden zu steife Folien bei der Flachlegung des in der Runddüse gebildeten und anschließend erstarrten Folienschlauchs Falten, die zu einer ungenügenden Qualität der Folie sowie einem ineffizienten Produktionsablauf führen.

Aufbauten von polyamidhaltigen Folien sind beispielsweise in The Wiley Encyclopedia of Packaging Teehnology (Hrg. M. Bakker, D. Eckroth; John Wiley & Sons, 1986) sowie in Nentwig (Joachim Nentwig: Kunststoff-Folien, Carl Hanser Verlag 1994, München) niedergelegt.

Für die Beschreibung von solchen polyamidhaltigen Folien und den in den einzelnen Schichten enthaltenen Polymeren gilt hier die Übereinkunft, daß, wenn nicht anderweitig kenntlich gemacht, Kurzzeichen für Kunststoffe nach DIN 7728 bzw. ISO 1043-1987 (E) verwendet werden.

Die Abkürzung HV bedeutet "Haftvermittler" und bezeichnet ein Polymer oder eine Polymermischung, die primär der Verbindung zweier benachbarter Schichten dient.

Bei mehrschichtigen Aufbauten wird die Schichtenfolge durch eine Aneinanderreihung der Kurzzeichen der Polymere der entsprechenden Schichten oder anderweitig erläuterter Symbole, voneinander getrennt durch doppelte Schrägstriche, wiedergegeben. Die Seite der Siegelschicht ist dabei stets rechts. Dabei kann auch nur ein Teil der gesamten, die Folie ausmachenden, Schichtenfolge angegeben werden. In diesen Fällen ist ebenfalls die Seite der Siegelschicht stets rechts und nicht angegebene Schichten oder Kombinationen von Schichten durch drei Punkte, ..., kenntlich gemacht. Mischungen aus unterschiedlichen Polymeren werden durch das Kennzeichen + sowie die Zusammenfassung der Komponenten in Klammern, ( ), kenntlich gemacht. Gegebenenfalls können hier zusätzlich Angaben zur prozentualen Zusammensetzung gemacht werden. Wenn nicht anders angegeben handelt es sich in solchen Fällen stets um Gewichtsanteile, die auf das Gesamtgewicht der Mischung bezogen sind. So beschreibt beispielsweise der Ausdruck ...//PA//EVOH//...//(PE-LD+PE-LLD)//d einen Aufbau mit einer nicht spezifizierten Außenschicht oder außenliegenden Schichtenfolge, gefolgt von einer im wesentlichen aus Polyamid bestehenden Schicht, gefolgt von einer im wesentlichen aus Ethylen/Vinylalkohol-Copolymerisat (EVOH) bestehenden Schicht, gefolgt von einer nicht spezifizierten Schicht oder Schichtenfolge, gefolgt von einer Schicht, die eine Mischung aus Polyethylen niedriger Dichte (PE-LD) und einem Ethylen/α-Olefin-Copolymerisat (PE-LLD) umfaßt, sowie einer mit d näher zu spezifizierenden, auf der Siegelseite folgenden Schicht.

Polyamid ist ein teilkristallines thermoplastisches Polymer. Das sich in einer Folie einstellende Gefüge des Polyamid ist dabei in hohem Maße von den Verarbeitungsbedingungen sowie der Zusammensetzung des Polyamid abhängig. Je langsamer die Abkühlgeschwindigkeit des Polyamids ist, desto größere kristalline Strukturen können sich durch eine Kristallisation herausbilden. Niedrigkristalline Systeme können durch den Einsatz von Co-Polyamiden aufgrund sich sterisch behindernder Moleküle erreicht werden. Letztere können rein aliphatische Systeme wie etwa PA 6/66 oder Copolymerisate aus aliphatischen Elementen mit aromatischen Bestandteilen wie beispielsweise PA 6/6I oder PA 6/6T sein.

Durch eine Nukleierung läßt sich die Geschwindigkeit der Keimbildung beim Kristallisationsvorgang erhöhen. Daher ist auch bei einer schnellen Abkühlung durch die beschleunigte Kristallisation während der Abkühlung aus der Schmelze der größte Teil des Kristallisationsvorgangs in der Folie bereits mit der Extrusion abgeschlossen. In nicht nukleierten Systemen kann sich hingegen wegen der im Verhältnis zur Kristallisationsgeschwindigkeit zu schnellen Abkühlung ein metastabiler Zustand ergeben, der zu einer Nachkristallisation des Polyamids über einen längeren Zeitpunkt im Anschluß an die Herstellung führt. Durch die mit einer Kristallisation einhergehende Verringerung des spezifischen Volumens des Polyamids kommt es so zu einem Nachschrumpf einer solchen Folie auf der Rolle. Dies ist grundsätzlich unerwünscht. Wesentliche daraus erwachsende Nachteile sind eine schlechte Planlage der Folie aufgrund eines ungleichmäßigen Schrumpfes sowie eine mit wachsender Entfernung vom Rollenkern hin zunehmende Breitenabweichung der Folie.

Bei sehr langsamen Abkühlgeschwindigkeiten wie beispielsweise beim Blasfolienprozeß werden nach dem Stand der Technik Copolyamide eingesetzt, um bei außenliegendem PA ausreichende optische Eigenschaften zu erzielen. Aufgrund deren niedriger Kristallisationsgeschwindigkeit ist das Problem eines Nachschrumpfes trotz der gegenüber Flachfolien niedrigeren Abkühlgeschwindigkeiten auch für Blasfolien von hoher Bedeutung.

Der Bedarf an Copolyamiden, die in einer solchen Weise nukleiert sind, daß durch die Nukleierung die Transparenz der Folie nicht gestört wird, während die Nukleierung dennoch wirkungsvoll eine Nachkristallisation durch Beschleunigung des Kristallisationsvorganges beim Erstarren vermeidet, kann nach aktuellen Stand der Technik nicht bedient werden.

Der Einsatz von konventionellen nukleierenden Systemen, insbesondere in Form dispergierter feinteiliger anorganischer fester Partikeln ist Stand der Technik. WO 8802763 nennt hier insbesondere Talkum, Mica, Kaolin und in zweiter Linie solche Substanzen wie Asbest, Aluminium, Silikate, Silberbromid, Graphit, Molybdendisulfid, Lithiumfluorid, Natriumphenylphosphinat, Magnesiumoxid, Quecksilberbromid, Quecksilberchlorid, Cadmiumacetat, Bleiacetat, Silberchlorid, Kieselguhr und dergleichen. Genannte Systeme werden in Konzentrationen zwischen einem Tausendstel Prozent und einem Prozent, bezogen auf das Gesamtgewicht des nukleierten Polymers hinzugegeben.

Die Zugabe fester Partikel im Größenbereich von unterhalb eines Mikrometers in polymere Matrizen und speziell Polyamide ist ebenfalls seit längerem beschrieben. Solche Systeme werden in erster Linie zur Erhöhung der mechanischen Steifigkeit sowie der Barriere gegen Gase und der Wärmebeständigkeit, der Entflammbarkeit oder der Feuchtigkeitsaufnahme bei hydrophilen Systemen eingesetzt. Stets ergibt sich eine Verschlechterung der Knickbruchbeständigkeit in Verbindung mit einer Erhöhung der Steifigkeit.

EP 358 415 beschreibt eine Folie aus einem Polyamidharz mit darin gleichmäßig dispergiertem Schichtsilikat, wobei die einzelnen Schichten des Schichtsilikats Dicken um 1 nm und Seitenlängen bis hinauf zu 1 µm aufweisen können. Die Schichten liegen in der Polyamidmatrix durch geeigneten Aufschluß separiert vor und weisen Abstände voneinander um 10 nm auf. Mit diesem Material aus Polyamid 6 als Basispolymer hergestellte Folien zeichnen sich gegenüber solchen aus reinem Polyamid 6 durch eine deutlich erhöhte Sauerstoffbarriere und Steifigkeit aus. Die Gleiteigenschaften werden verbessert. Die Transparenz von einschichtigen amorph abgeschreckten Flachfolien sowie Blasfolien mit Wasserkühlung mit dem Aufbau Polyamidmischung//Haftvermittler//PE-LD bleibt gegenüber reinem Polyamid 6 unverändert. Anhand aufgeführter Beispiele von PA6-Folien mit abgestuftem Gehalt an Schichtsilikat wird die signifikante Abnahme der Knickbruchfestigkeit und Zunahme der Steifigkeit im Bereich zwischen 0 und 3,0 Gewichts-% Silikat deutlich. Daher sind solche Aufbauten für die hier vorliegenden Anforderungen nicht geeignet.

WO 9304118 sowie WO 9311190 und WO 9304117 offenbaren Polymer-Nano-Komposits mit ebenfalls plättchenförmigen Partikeln im Dickenbereich von wenigen Nanometern. Insbesondere werden Komposite aus PA6 und Montmorillonit bzw. PA6 und Silikaten beschrieben. Diese Materialien lassen sich zu Folien verarbeiten. Vorteilhaft ist in diesem Fall eine parallele Ausrichtung der plättchenförmigen Partikeln zur Folienoberfläche. Es werden Anwendungen als Monofolie sowie die Möglichkeit, Mehrschichtfolien herzustellen, beschrieben. Dabei können die aus diesem Material gefertigten Folien optional gereckt werden, um eine noch bessere Orientierung der Nanopartikeln zu erreichen. Vorteile solcher Folien gegenüber solchen ohne nanoskalige Partikeln sind eine höhere Steifigkeit, eine höhere Festigkeit im feuchten Zustand, eine bessere Dimensionsstabilität, eine höhere Gasbarriere und eine geringere Wasseraufnahme. Wesentliche Nachteile solcher Folienaufbauten sind wiederum die zu hohe Steifigkeit und die damit einhergehenden geringe Knickbruch- und Durchstoßfestigkeit. Daher sind solche Aufbauten für die hier vorliegenden Anforderungen ebenfalls nicht geeignet.

EP 818 508 offenbart eine Mischung aus 60-98 % PA MXD6 mit 2-40 % eines aliphatischen Polyamids, das wiederum inorganische Partikeln im Größenbereich von Manometern enthält. Es werden Mischungen insbesondere mit PA 6 als aliphatischem Polyamid beschrieben. Daneben werden Mehrschichtfolien als daraus herstellbare Formteile beschrieben. Offenbarte Aufbauten enthalten stets die beschriebene Mischung als Innen- und/oder Außenschicht. Es werden auch Strukturen mit genannter Schicht und einer auf der Folienaußenseite befindlichen Schicht mit Nanoteilchen enthaltendem PA 6 beschrieben. Sämtliche genannten Aufbauten weisen als Vorteil eine hohe Sauerstoffbarriere auf, die auch durch eine Sterilisation nicht beeinträchtigt wird. Im Gegensatz zu Folien mit EVOH als Sauerstoffsperrschicht trüben die dort patentierten Folien durch die Sterilisation nur geringfügig ein. Gegenüber einer Flachfolie aus reinem PA6 weist eine erfindungsgemäße Folie mit dem Aufbau PA 6//(80 % PA MXD6 + 20 % PA 6 mit Nanoteilchen)//PA 6 keine nennenswerte Verbesserung der Transparenz auf. Hauptnachteil solcher Strukturen mit einem hohen Anteil von PA MXD6 ist wiederum die geringe Knickbruch- und Durchstoßfestigkeit dieses Materials. Solche Aufbauten sind somit für die hier vorliegenden Anforderungen wiederum nicht geeignet.

EP 810259 beschreibt ebenfalls eine Polyamidformmasse mit nanodispersen Füllstoffen. Durch Zugabe genügend feinteiliger Oxide, Oxihydrate oder Carbonate kann die dort gewünschte Barrierewirkung des Polyamid verbessert werden. Die Teilchen haben bevorzugt einen Durchmesser von weniger als 100 nm und werden in Konzentrationen oberhalb von 0,1 Gewichts-% eingesetzt. Das Patent beschreibt auch mehrschichtige Folien mit wenigstens einer Schicht aus dieser Formmasse zur Verbesserung der Sauerstoffsperre. Die optischen Eigenschaften der daraus geformten Folien verschlechtern sich jedoch gegenüber dem nicht additivierten System. Daher sind entsprechende Folien ebenfalls für den vorliegenden Anwendungsfall ungeeignet.

Entsprechende Monofolien aus Polyamid 6 mit dem nanodispers aufgeschlossenen Schichtsilikat Montmorillonit zeichnen sich durch gute optische Eigenschaften, einen geringen Schrumpf, eine deutlich erhöhte Steifigkeit sowie eine bei 2000 ppm und 4000 ppm Silikat gegenüber der ungefüllten Folie erhöhte Knickbruchanfälligkeit aus.

Es stellte sich die Aufgabe, eine flexible Polyamidfolie mit einem hohen Glanz und einer hohen Transparenz bereitzustellen, die eine hohe Zähigkeit, gekennzeichnet durch eine niedrige Steifigkeit bei hoher Knickbruchfestigkeit, aufweist, wobei die Folie darüberhinaus dimensionsstabil ist, d.h. nach der Herstellung nur in äußerst geringem Maße nachschrumpft. Sie soll ferner insbesondere auf Blasfolienanlagen üblicher Bauart problemlos und wirtschaftlich herstellbar sein.

Erfindungsgemäß gelang dies durch Bereitstellung einer ein- oder mehrschichtigen Folie mit wenigstens einer Schicht (I) aus einer Polyamidzusammensetzung mit darin dispergierten, nanoskaligen, nukleierenden Partikeln (P), dadurch gekennzeichnet, dass die kleinsten in der Dispersion eine starre Einheit bildenden Bestandteile (B) der Partikeln (P) im zahlengewichteten Mittel aller Bestandteile (B) in wenigstens einer, für jeden Bestandteil (B) beliebig wählbaren Richtung eine Ausdehnung von weniger als 100 nm aufweisen, dass bei einer Abkühlung der Schicht (I) aus dem vollständig aufgeschmolzenen Zustand mit einer Abkühlrate zwischen 10° und 20°C pro Minute kristalline Strukturen entstehen, die von der Oberfläche der Partikel (P) ausgehen, dass der Gewichtsanteil der Partikeln (P), bezogen auf das Gesamtgewicht des die Schicht (I) bildenden Polyamidzusammensetzung zwischen 10 ppm und 2000 ppm liegt, dass die die Schicht (I) bildende Polyamidzusammensetzung aus der Gruppe enthaltend ein oder mehrere Homopolyamide und/oder Copolyamide, von denen wenigstens ein Polyamid aromatische Monomere enthält, so dass der molgewichtige Anteil der aromatischen Monomere, bezogen auf die gesamte Molmenge der Polyamidzusammensetzung, nicht weniger als 3 % und nicht mehr als 15 % beträgt, oder aus der Gruppe enthaltend ein oder mehrere aliphatische Polyamide, die als Mischung einen DSC-Schmelzpunkt bei einer Abkühlrate von 10K/min von nicht über 205°C aufweisen.

Schicht (I) enthält bevorzugt Polyamid 6/66 oder ein teilaromatisches Copolyamid mit einem molgewichteten Anteil aromatischer Monomere zwischen 3 % und 15 % oder Mischungen aus Polyamid 6/66 und/oder Polyamid 6 mit teilaromatischen Homopolyamiden oder Copolyamiden, die einen molgewichteten Anteil aromatischer Monomere zwischen 3 % und 15 %, bezogen auf die gesamte Stoffmenge der Mischung, enthalten.

Eine besonders bevorzugte Zusammensetzung der Schicht (I) bildet ein teilaromatisches Copolyamid mit einem molgewichteten Anteil aromatischer Monomere zwischen 5 % und 12 % oder Mischungen aus Polyamid 6 mit teilaromatischen Homopolyamiden oder Copolyamiden, die einen molgewichteten Anteil aromatischer Monomere zwischen 5 % und 12 %, bezogen auf die gesamte Stoffmenge der Mischung, enthalten.

Daraus wiederum erweist sich besonders eine Zusammensetzung der Schicht (I) in Form eines teilaromatischen Copolyamids mit einem molgewichteten Anteil aromatischer Monomere zwischen 5 % und 8 % insbesondere für die Erzielung hervorragender optischer Eigenschaften als günstig.

Der Gewichtsanteil der Partikeln (P), bezogen auf das Gesamtgewicht der die Schicht (I) bildenden Zusammensetzung beträgt vorzugsweise zwischen 50 und 2000 ppm. Bevorzugt sind Partikeln, deren kleinste in der Dispersion eine starre Einheit bildenden Bestandteile (B) in zwei senkrecht zueinander stehenden, beliebig wählbaren, Richtungen jeweils eine Ausdehnung von wenigstens dem Zehnfachen der Größe der Bestandteile (B) in der Richtung mit der geringsten Ausdehnung des Bestandteils (B) aufweisen. Die Dicke dieser plättchenförmigen Teilchen ist bevorzugt kleiner als 10 nm. Die in Schicht (I) eingesetzten Partikeln sind bevorzugt Schichtsilikate. Diese können ausgewählt sein aus der Gruppe umfassend Phyllosilikate wie Magnesiumsilikat oder Aluminiumsilikat, sowie Montmorillonit, Saponit, Beidellit, Nontronit, Hectorit, Stevensit, Vermiculit, Halloysit oder deren synthetische Analoge.

Die Schicht (I) der erfindungsgemäßen Folie kann auch übliche weitere Additive wie Gleitmittel, insbesondere Ethylenbisstearylamid, oder übliche Nukleierungsmittel, insbesondere Talkum, enthalten. Schicht (I) kann zusätzlich Antiblockmittel enthalten Diese sind bekannte feste anorganische Partikel, die aus der äußeren Oberfläche der Oberfläche hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,1 bis 2 Gewichts-%, vorzugsweise 0,1 bis 0,8 Gewichts-%. Die mittlere Teilchengröße liegt zwischen 1 und 15 µm, wobei hier Teilchen mit kugelförmiger Gestalt besonders geeignet sind.

Die erfindungsgemäße Folie kann ein- oder mehrschichtig aufgebaut sein. Eine mehrschichtige Ausführung enthält wenigstens eine Schicht (I). Eine Ausführung mit mehr als einer Schicht (I) kann bevorzugt unterschiedlich zusammengesetzte Schichten (I) enthalten.

Es ist bei einer mehrschichtigen Ausführung der erfindungsgemäßen Folie vorteilhaft, Schicht (I) wegen des hohen Glanzes als Außenschicht vorzusehen.

Eine mehrschichtige Ausführung der erfindungsgemäßen Folie kann neben einer oder mehrerer Schichten (I) auch weitere polyamidhaltige Schichten (II) aufweisen, die kein oder weniger als 10 ppm nanoskaliges Nukleierungsmittel enthalten. Die Schichten (II) enthalten bevorzugt Polyamid 6/66 oder ein teilaromatisches Copolyamid mit einem molgewichteten Anteil aromatischer Monomere zwischen 3 % und 15 % oder Mischungen aus Polyamid 6/66 und/oder Polyamid 6 mit teilaromatischen Homopolyamiden oder Copolyamiden, die einen molgewichteten Anteil aromatischer Monomere zwischen 3 % und 15 %, bezogen auf die gesamte Stoffmenge der Mischung, enthalten.

Bevorzugt ist eine Ausführung der erfindungsgemäßen Folie ohne Schichten (II).

Eine mehrschichtige Ausführung der erfindungsgemäßen Folie kann zur Erleichterung der Heißsiegelbarkeit eine Schichtenfolge (V), oder Siegelschicht, auf einer Außenseite der Mehrschichtfolie aufweisen. Die Schichtenfolge (V) bildet somit die dem Füllgut zugewandte Innenseite der erfindungsgemäßen Mehrschichtfolie. Die Schichtenfolge (V) enthält in bevorzugter Form die üblicherweise als Siegelmedium verwendeten Polymere oder Mischungen aus Polymeren aus der Gruppe umfassend Copolymerisate aus Ethylen und Vinylacetat (E/VA), besonders bevorzugt mit einem Vinylacetat-Gehalt, bezogen auf das Gesamtgewicht des Polymers, von höchstens 20 %, Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), besonders bevorzugt mit einem Gehalt des Carbonsäurecomonomers, bezogen auf das Gesamtgewicht des Polymers, von höchstens 15 %, in noch weiter bevorzugter Form höchstens 8 %, Salze der Copolymerisate aus Ethylen und ungesättigten Carbonsäuren, insbesondere E/MAA, (Ionomere), besonders bevorzugt mit einem Gehalt des Carbonsäurecomonomers, bezogen auf das Gesamtgewicht des lonomers, von höchstens 15 %, in noch weiter bevorzugter Form höchstens 10%, Polyethylen niedriger Dichte (PE-LD), besonders bevorzugt in einer Dichte von wenigstens 0,91 g/cm³ und höchstens 0,935 g/cm³, Polyethylen hoher Dichte (PE-HD), Copolymerisate (PE-LLD) aus Ethylen und α-Olefinen mit wenigstens 3 C-Atomen, beispielsweise Buten, Hexen, Octen, 4-Methyl-1-Penten. Die Copolymerisate (PE-LLD) aus Ethylen und α-Olefinen können mit konventionellen Katalysatoren oder mit Metallocen-Katalysatoren hergestellt sein. Besonders bevorzugt sind daraus Copolymerisate (PE-LLD) aus Ethylen und α-Olefinen mit einer Dichte von wenigstens 0,90 g/cm³ und höchstens 0,94 g/cm³.

Die erfindungsgemäße Folie kann auch eine mehrschichtig ausgeführte Siegelschicht oder Schichtenfolge (V) enthalten. So können die oben genannten Stoffe etwa zur Kostenoptimierung in einer solchen Weise angeordnet sein, daß die auf der Innenseite der Folie liegende, dem Produkt zugewandte, Einzelschicht sich durch einen besonders frühen Siegelbeginn auszeichnet und die sich zur Folienmitte daran anschließende Einzelschicht erst bei höheren Temperaturen schmilzt, jedoch dafür kostengünstiger ist oder durch eine höhere Schmelzefestigkeit die Produzierbarkeit einer solchen mehrschichtigen Siegelschicht als Blasfolie erst ermöglicht. Es können auch haftvermittelnde Polymere aus den genannten Stoffgruppen oder auf deren Basis hergestellte, etwa mit Anhydrid durch Propfung modifizierte, Polymere zum Einsatz kommen. Beispiele für solche Aufbauten sind die Schichtenfolgen PE-LD//E/VA oder PE-LD//E/AA//Ionomer.

Alle oder einzelne Lagen der Schichtenfolge (V) können zusätzlich mit Additiven ausgestattet sein, die die Funktionalität der Folie verbessern. Beispiele sind als Antiblockmittel bekannte feste anorganische Partikel, die aus der äußeren Oberfläche der Siegelschicht hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,1 bis 2 Gewichts-%, vorzugsweise 0,1 bis 0,8 Gewichts-%. Die mittlere Teilchengröße liegt zwischen 1 und 10 µm, bevorzugt 2 und 5 µm, wobei hier Teilchen mit kugelförmiger Gestalt besonders geeignet sind. In mehrlagigen Siegelschichten werden diese Partikel bevorzugt nur in der äußeren Einzelschicht eingesetzt. Andere Additive, die die Gleitfähigkeit der Innenseite der Mehrschichtfolie, auch in Zusammenwirken mit den genannten festen Partikeln, verbessern, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gewichts-%, vorzugsweise 0,02 bis 1 Gewichts-%. Besonders geeignet ist der Zusatz von höheren aliphatischen Säureamiden im Bereich von 0,01 bis 0,25 Gewichts-%. Ein insbesondere für die oben genannten, in der Siegelschicht verwendeten, Polymere geeignetes aliphatisches Säureamid ist Erucasäureamid.

Die erfindungsgemäße Mehrschichtfolie kann zusätzlich zu der oder den polyamidhaltigen Schichten (I) und gegebenenfalls (II) und gegebenfalls der Schichtenfolge (V) auch eine oder mehrere EVOH-haltige Schichten (III) zur Verbesserung der Sauerstoffsperreigenschaften enthalten, wobei die Schichten (III) bevorzugt wenigstens 50 Gewichts-%, bezogen auf das Gesamtgewicht der jeweiligen EVOHhaltigen Schicht, eines EVOH mit wenigstens 85 und höchstens 40 Mol-% Vinylacetat, das zu wenigstens 90% verseift ist, enthalten. In einer besonders bevorzugten Form ist eine EVOH-haltige Schicht (III) zwischen zwei polyamidhaltigen Schichten (I) und/oder (II) plaziert.

Die erfindungsgemäße Folie kann zusätzlich zu den Schichten (I), (II) und gegebenenfalls (III) und (V) haftvermittelnde Schichten (IV) enthalten. Eine solche haftvermittelnde Schicht ist bevorzugt ein Kaschierklebstoff auf Basis von Polyurethanen oder Polyesterurethanen oder ein extrudierbarer Haftvermittler. Als extrudierbarer Haftvermittler werden bevorzugt modifizierte Polyolefine eingesetzt. In bevorzugter Form sind dies Polyolefine mit Carboxylgruppen, wie z.B. Polyethylen, Polypropylen, Ethylen/α-Olefin-Copolymerisate oder Ethylen/Vinylacetat-Copolymerisate, die mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestem, Säureamiden und Säureimiden, gepfropft sind. Als extrudierbare Haftvermittler können daneben Copolymerisate von Ethylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester oder entsprechende Pfropfpolymere auf Polyolefine wie z.B. Polyethylen, Polypropylen oder Ethylen/α-Olefin-Copolymerisate, die mit einem Monomer der genannten ungesättigten Säuren pfropfpolymerisiert sind, zum Einsatz kommen. Besonders bevorzugt sind Polyolefine mit aufgepfropftem α,β-einfach ungesättigten Dicarbonsäureanhydrid, insbesondere mit Maleinsäureanhydrid gepropfte Ethylen/α-Olefin-Copolymerisate. Im allgemeinen weisen die durch einen Haftvermittler verbundenen Schichten keine genügend hohe Adhäsion zueinander auf. Es können jedoch auch Haftvermittlerschichten zwischen zwei direkt coextrudierbaren Schichten zum Einsatz kommen, um etwa die Flexibilität der Folie zu beeinflussen.

Zusätzlich zu den Schichten (I), (II) und gegebenenfalls (III),(V) sowie (IV) kann die erfindungsgemäße Mehrschichtfolie noch weitere polymere Schichten enthalten.

Eine mehrschichtige Ausführung der erfindungsgemäßen Folie enthält bevorzugt Schicht (I) als Außenschicht.

Die erfindungsgemäße Folie läßt sich auf üblichen Anlagen zur Produktion von Mono- oder Mehrschichtfolien herstellen.

Die erfindungsgemäße Mehrschichtfolie kann auch nach der Extrusion einem Reckvorgang unterzogen werden. Die Orientierung kann nur in Längsrichtung, nur in Querrichtung, zuerst in Längs- und anschließend in Querrichtung, simultan in Längs- und Querrichtung oder in Kombinationen aus diesen Schritten erfolgen. Dabei kann die Reckung für die gesamte Mehrschichtfolie oder für Teilverbunde daraus durchgeführt werden.

Die erfindungsgemäße Mehrschichtfolie kann auf der Außenseite oder zwischen zwei inneren Schichten mit einer Schicht aus einem Metalloxid, darstellbar als MOx, versehen werden. Diese Schicht weist vorzugsweise eine Dicke von 5 bis 200 nm auf. In genannter Summenformel liegt x zwischen 1 und 2,5; M ist vorzugsweise Silikon, Eisen oder Aluminium.

Die erfindungsgemäße Folie kann auch auf der Außenseite, der Innenseite oder zwischen einzelnen Schichten bedruckt sein.

Mit der erfindungsgemäßen Folie gelingt es überraschenderweise, eine Folie bereitzustellen, die bei hoher Dimensionsstabilität sehr gute optische Eigenschaften mit einer hohen Zähigkeit verbindet.

Die erfindungsgemäße Folie läßt sich sicher, effizient und störungsfrei fertigen. Insbesondere auf Blasfolienanlagen üblicher Bauart mit Luftkühlung weist die Folie auch bei hohen Dicken und ungünstigen Abkühlverhältnissen ausgezeichnete optische Eigenschaften auf. Ein Nachschrumpf auf dem Wickel findet nicht mehr statt. Im Gegensatz zu herkömmlichen nukleierten Polyamiden weist die erfindungsgemäße Folie dabei eine bessere Transparenz auf. Gegenüber nanoskalig nukleiertem Polyamid 6 ist sie überraschend weich und damit sicher und faltenfrei durch die Flachlegung zu führen.

Es ist überraschend, daß die genannten Eigenschaften ausschließlich bei Zugabe geringster Mengen der nanoskaligen Füllstoffe eintraten. Im Gegensatz zum publizierten Stand der Technik, wonach Nukleierungsmittel oberhalb einer systemspezifisch gegebenen Konzentration zu keiner weiteren Wirksamkeitserhöhung führen, bewirken zu hohe Zugabemengen der nukleierenden nanoskaligen Füllstoffe hier eine erhebliche Versteifung der Folie. Insofern war es unerwartet, daß ausgehend von bekannten polyamidischen Systemen mit nanoskaligen Füllstoffen eine deutliche Reduzierung des Anteils dieser Füllstoffe das Problem der Steifigkeit eliminieren und gleichzeitig das Eigenschaftsbild in den Punkten Optik und Dimensionsstabilität nachhaltig verbessern würde.

Schließlich war nicht zu erwarten, daß die erfindungsgemäße Folie die von der Fachwelt mittlerweile bei Copolyamid-basierten Blasfolien akzeptierten Nachteile, die hinsichtlich der optischen Eigenschaften durch eine Nukleierung entstehen, nicht nur überwinden, sondern in diesem Punkt auch noch eine weitere Verbesserung erzielen würde.

Ein weiterer Gegenstand ist die Verwendung der erfindungsgemäßen Folien zur Verpackung von Lebensmitteln.

### Beispiele

### Vergleichsbeispiel 1 (V1):

Eine Folie mit dem Aufbau PA//HV//PE-LD in den Dicken 40//10//150 µm wird als Blasfolie nach dem für die Produktion von Blasfolien üblichen Verfahren produziert. Die Temperatur der Kühlluft beträgt 20°C. Die Düse hat einen Durchmesser von 300 mm, und die Folie wird auf eine Breite von 720 mm flachgelegt sowie anschließend auf eine Breite von 700 mm geschnitten. Der Schlauch wurde jedoch auf dem Wickel nicht verlegt. Direkt nach dem Schnitt erfolgt die Trennung der Schlauchhälften und die Aufwicklung der Folie. Der Ausstoß der Düse beträgt 100 kg/h. Die PA enthaltende Schicht bildet die Außenseite des Folienschlauchs.

Das verwendete Polyamid 6 enthält 600 ppm Ethylen-Bisstearylamid und ist mit ca. 150 ppm Talkum nukleiert.

Der Haftvermittler ist ein mit Maleinsäureanhydrid gepfropftes LLDPE mit einer Dichte von 920 kg/m³ und einem MFI von 2,7 g/10 min gemessen bei 190°C und einem Auflagegewicht von 2,16 kg. Als PE-LD wurde ein Material mit einer Dichte von 928 kg/m³ und einem MFI von 1 g/10 min gemessen bei 190°C und einem Auflagegewicht von 2,16 kg verwendet.

### Vergleichsbeispiel 2 (V2):

Die Folie aus Vergleichsbeispiel 1. wird mit einem nicht nukleierten Polyamid 6 mit ca. 600 ppm Ethylen-Bisstearylamid gefertigt. Alle anderen Bedingungen entsprechen Vergleichsbeispiel 1.

### Vergleichsbeispiel 3 (V3):

Die Folie aus Vergleichsbeispiel 1. wird mit einer Mischung aus 90% eines nicht nukleierten Polyamids 6/6I mit einem Anteil von 94 Mol-% ε-Caprolactam sowie 10% eines nicht nukleierten Polyamids 6I/6T mit einem molaren Verhältnis der Isophthalsäuremonomere zu den Terephthalsäuremonomeren von 7 zu 3 gefertigt. Alle anderen Bedingungen entsprechen Vergleichsbeispiel 1.

### Vergleichsbeispiel 4 (V4):

Die Folie aus Vergleichsbeispiel 1. wird mit einem Polyamid 6 enthaltend 2 Gewichts-% Montmorillonit gefertigt. Der Montmorillonit liegt durch geeigneten Aufschluß in dispergierter Form als Plättchen vor. Die Plättchen haben eine Dicke von ca. 1 nm und einen Durchmesser von 100 bis 1000 nm. Alle anderen Bedingungen entsprechen Vergleichsbeispiel 1.

### Beispiel 5 (B5):

Folie aus Vergleichsbeispiel 1, wobei das verwendete Polyamid durch eine Mischung von 99,5 Gewichts-% der Polyamidzusammensetzung aus Vergleichsbeispiel 3 mit 0,5 Gewichts-% des Polyamid aus Vergleichsbeispiel 4 gebildet wird.

### Beispiel 6 (B6):

Folie aus Vergleichsbeispiel 1, wobei das verwendete Polyamid durch eine Mischung von 95 Gewichts-% der Polyamidzusammensetzung aus Vergleichsbeispiel 3 mit 5 Gewichts-% des Polyamid aus Vergleichsbeispiel 4 gebildet wird.

### Beispiel 7 (V7):

Folie aus Vergleichsbeispiel 1, wobei das verwendete Polyamid durch eine Mischung von 90 Gewichts-% der Polyamidzusammensetzung aus Vergleichsbeispiel 3 mit 10 Gewichts-% des Polyamid aus Vergleichsbeispiel 4 gebildet wird.

### Vergleichsbeispiel 8 (V8):

Folie aus Vergleichsbeispiel 1, wobei das verwendete Polyamid durch eine Mischung von 99 Gewichts-% der Polyamidzusammensetzung aus Vergleichsbeispiel 1 mit 1 Gewichts-% des Polyamid aus Vergleichsbeispiel 4 gebildet wird.

### Vergleichsbeispiel 9 (V9):

Folie aus Vergleichsbeispiel 1, wobei das verwendete Polyamid durch eine Mischung von 90 Gewichts-% der Polyamidzusammensetzung aus Vergleichsbeispiel 1 mit 10 Gewichts-% des Polyamid aus Vergleichsbeispiel 4 gebildet wird.

An den gefertigten Mustern wurden die folgenden physikalischen, produktions- und anwendungstechnischen Eigenschaften wie folgt bestimmt:
- Die Knickbruchfestigkeit bei einer Temperatur von 23°C und einer relativen Feuchte von 50 %, indem ein Probenzuschnitt einlagig zu einem Zylinder der Länge 198 mm und einem Umfang von 280 mm aufgerollt und beidseitig in entsprechend geformten Halterungen eingespannt wird. Die freie Länge des von der Folie geformten Zylinders zwischen den Halterungen beträgt 192 mm. Unter gleichzeitiger Drehung um 440° um die den Zylinder beschreibende Symmetrieachse werden die Halterungen mit einer gegebenen Zahl von Zyklen und einer Frequenz von 35 Zyklen pro Minute auf einen Abstand von 40 mm einander angenähert. Die zu prüfenden Folien werden zuvor 7 Tage in einem Klima von 23°C und 50 % relativer Luftfeuchte gehalten. Die Zahl der auf diese Weise in der Folie nach der vorgegebenen Zahl von Hüben entstandenen Knickbrüche läßt sich durch einseitiges Benetzen der Folie mit Ammoniaklösung bei gleichzeitigem Kontakt der anderen Folienseite zu einem Bogen Lichtpauspapier bestimmen. Die Zahl der nach 15 min erkennbaren, durch Ammoniak hervorgerufenen, blauschwarzen Flecken auf dem Lichtpauspapier wird der Zahl der Knickbrüche im untersuchten Folienabschnitt zugeordnet. Der Wert wird dabei als Durchschnitt der Einzelwerte aus zwei Prüfmustern gewonnen
- Die Trübung nach ASTM D 1003.
- Der Glanz auf der Außenseite der Folie unter einem Winkel von 20° nach DIN 67530.
- Nachschrumpf auf der Rolle nach zweiwöchiger Lagerung bei 15 bis 20°C und 40 bis 70 % relativer Feuchte. Es wurde eine visuelle Beurteilung nach Abweichungen von der Zylindrizität der Rollehin zu einer wellenartigen Oberfläche wie folgt vorgenommen:
   - ++: ohne erkennbaren Nachschrumpf, zylinderförmige Rolle
   - +: leichter Nachschrumpf erkennbar, leichte Wellenbildung
   - -: deutlicher Nachschrumpf erkennbar, deutliche Wellenbildung
   - - -: starker Nachschrumpf erkennbar, erhebliche Wellenbildung
- Die Produzierbarkeit als Blasfolie unter den genannten Bedingungen. Es wurde insbesondere die Faltenbildung der Folie in der Flachlegung beurteilt. Es wurde zwischen den Kategorien produzierbar (ja) sowie nicht produzierbar (nein) unterschieden.

Die Ergebnisse sind in untenstehenden Tabellen zusammengefaßt:

| Merkmal (Einheit) | Beispiel (B)oder Vergleichsbeispiel (V) | | | | | | | | |
|---|---|---|---|---|---|---|---|---|---|
| | V1 | V2 | V3 | V4 | B5 | B6 | V7 | V8 | V9 |
| Glanz (Glanzeinheiten) | 51 | 34 | 72 | 91 | 92 | 94 | 93 | 53 | 76 |
| Trübung (%) | 22 | 27 | 15 | 12 | 11 | 11 | 12 | 20 | 14 |
| Lochzahl nach 250 Hüben | 6 | 4,5 | 3 | 13,5 | 3,5 | 4 | 6,5 | 7 | 9 |
| Nachschrumpf | + | + | -- | ++ | ++ | ++ | ++ | + | ++ |
| Produzierbarkeit | ja | ja | ja | nein* | ja | ja | nein* | ja | nein* |

| | | | | | | | | | |
|---|---|---|---|---|---|---|---|---|---|
| Eigenschaften der Beispiele und Vergleichsbeispiele Erläuterungen zur Produzierbarkeit: * Die Folie ist so steif, daß sich in der Flachlegung Falten bilden. | | | | | | | | | |

## Patentansprüche

1. Ein- oder mehrschichtige Folie mit wenigstens einer Schicht (I) aus einer Polyamidzusammensetzung mit darin dispergierten, nanoskaligen, nukleierenden Partikeln (P), **dadurch gekennzeichnet, daß** die kleinsten in der Dispersion eine starre Einheit bildenden Bestandteile (B) der Partikel (P) im zahlengewichteten Mittel aller Bestandteile (B) in wenigstens einer, für jeden Bestandteil (B) beliebig wählbaren Richtung eine Ausdehnung von weniger als 100 nm aufweisen, dass bei einer Abkühlung der Schicht (I) aus dem vollständig aufgeschmolzenen Zustand mit einer Abkühlrate zwischen 10° und 20°C pro Minute kristalline Strukturen entstehen, die von der Oberfläche der Partikel (P) ausgehen, dass der Gewichtsanteil der Partikel (P), bezogen auf das Gesamtgewicht der die Schicht (I) bildenden Polyamidzusammensetzung, zwischen 10 ppm und 2000 ppm liegt und daß die die Schicht (I) bildende Polyamidzusammensetzung aus der Gruppe enthaltend ein oder mehrere Homopolyamide und/ oder Copolyamide, von denen wenigstens ein Polyamid aromatische Monomere enthält, so daß der molgewichtige Anteil der aromatischen Monomere, bezogen auf die gesamte Molmenge der Polyamidzusammensetzung, nicht weniger als 3 % und nicht mehr als 15 % beträgt, oder aus der Gruppe enthaltend ein oder mehrere aliphatische Polyamide, die als Mischung einen DSC-Schmelzpunkt bei einer Abkühlrate von 10K/min von nicht über 205°C aufweisen.

2. Folie nach Anspruch 1, **dadurch gekennzeichnet, daß** Schicht (I) ein Polyamid enthält, das ausgewählt ist aus der Gruppe umfassend Polyamid 6/66, teilaromatische Copolyamide mit einem molgewichteten Anteil aromatischer Monomere zwischen 3 % und 15 % und Mischungen aus Polyamid 6/66 und/oder Polyamid 6 mit teilaromatischen Homopolyamiden oder Copolyamiden, die einen molgewichteten Anteil aromatischer Monomere zwischen 3 % und 15 %, bezogen auf die gesamte Stoffmenge der Mischung, enthalten.

3. Folie nach Anspruch 1 oder 2, **dadurch gekennzeichnet, daß** die in Schicht (I) eingesetzten Partikeln Bestandteile (B) aufweisen, die in zwei senkrecht zueinander stehenden, für jeden Bestandteil (B) beliebig wählbaren Richtungen jeweils eine Ausdehnung von wenigstens dem Zehnfachen der Größe der Bestandteile (B) in der Richtung mit der geringsten Ausdehnung des Bestandteils (B) aufweisen.

4. Folie nach einem oder mehreren der Ansprüche 1 bis 3, **dadurch gekennzeichnet, daß** die in Schicht (I) eingesetzten Partikeln Schichtsilikate sind.

5. Mehrschichtige Folie nach einem oder mehreren der Ansprüche 1 bis 4, **dadurch gekennzeichnet, daß** sie neben einer oder mehreren Schichten (I) auch weitere polyamidhaltige Schichten (II) aufweist, die kein oder weniger als 10 ppm nanoskaliges Nukleierungsmittel enthalten.

6. Mehrschichtige Folie nach einem oder mehreren der Ansprüche 1 bis 5, **dadurch gekennzeichnet, daß** sie eine oder mehrere haftvermittelnde Schichten (IV) enthält.

7. Mehrschichtige Folie nach einem oder mehreren der Ansprüche 1 bis 6 **dadurch gekennzeichnet, daß** sie auf einer Außenseite eine Siegelschicht, eine mehrschichtig ausgeführte Siegelschicht oder eine Schichtenfolge (V) aufweisen.

8. Mehrschichtige Folie nach einem oder mehreren der Ansprüche 1 bis 7, **dadurch gekennzeichnet, daß** sie wenigstens eine EVOH-haltige Schicht (III) aufweist.

9. Mehrschichtige Folie nach einem oder mehreren der Ansprüche 1 bis 8, **dadurch gekennzeichnet, daß** sie zusätzlich zu den Schichten (I) und gegebenenfalls (II), (III), (IV) und/ oder (V) eine oder mehrere weitere polymere Schichten enthält.

10. Folie nach einem oder mehreren der Ansprüche 1 bis 9, **dadurch gekennzeichnet, daß** Schicht (I) eine Außenschicht der Folie bildet.

11. Folie nach einem oder mehreren der Ansprüche 1 bis 10, **dadurch gekennzeichnet, daß** sie als Blasfolie hergestellt worden ist.

12. Folie nach einem oder mehreren der Ansprüche 1 bis 11, **dadurch gekennzeichnet, daß** sie auf einer Außenseite oder zwischen einzelnen Schichten eine Metalloxidschicht mit einer Dicke von 5 nm bis 200 nm aufweist.

13. Folie nach einem oder mehreren der Ansprüche 1 bis 12, **dadurch gekennzeichnet, daß** wenigstens Schicht (I) nach der Extrusion einem Reckvorgang nur in Längsrichtung, nur in Querrichtung, zuerst in Längs- und anschließend in Querrichtung, simultan in Längs- und Querrichtung oder Kombinationen daraus unterzogen worden ist.

14. Verwendung einer ein- oder mehrschichtigen Folie gemäß einem oder mehreren der Ansprüche 1 bis 13 zur Verpackung von Lebensmitteln.

## Claims

1. Single- or multilayer film having at least one layer (I) composed of a polyamide composition with, dispersed therein, nano-scale, nucleating particles (P), **characterized in that** the smallest constituents (B) present among the particles (P) and forming a rigid unit in the dispersion have a dimension of less than 100 nm, this being the number average of all of the constituents (B) in at least one direction freely selectable for each constituent, and **in that** when the layer (I) is cooled from the fully molten state at a cooling rate of from 10 to 20°C per minute, crystalline structures are produced which emanate from the surface of the particles (P), and **in that** the proportion by weight of the particles (P), based on the total weight of the polyamide composition forming the layer (I), is from 10 to 2000 ppm, and **in that** the polyamide composition forming the layer (I) has been selected from the group consisting of one or more homopolyamides and/or copolyamides, of which at least one polyamide contains aromatic monomers, so that the molar proportion of the aromatic monomers, based on the total molar amount of the polyamide composition, is not less than 3% and not more than 15%, or from the group consisting of one or more aliphatic polyamides which in the form of a mixture have a DSC melting point not above 205°C at a cooling rate of 10 K/min.

2. Film according to Claim 1, **characterized in that** layer (I) comprises a polyamide which has been selected from the group consisting of nylon-6/6,6, semiaromatic copolyamides with a molar proportion of from 3 to 15% of aromatic monomers and mixtures composed of nylon-6/6,6 and/or nylon-6 with semiaromatic homopolyamides or copolyamides whose molar proportion of aromatic monomers is from 3 to 15%, based on the total molar amount of the mixture.

3. Film according to Claim 1 or 2, **characterized in that** the particles used in layer (I) have constituents (B) each of which has, in two mutually perpendicular directions freely selectable for each constituent (B), a dimension of at least ten times the size of the constituents (B) in the direction with the smallest dimension of the constituent (B).

4. Film according to one or more of Claims 1 to 3, **characterized in that** the particles used in layer (I) are phyllosilicates.

5. Multilayer film according to one or more of Claims 1 to 4, **characterized in that** it has, besides one or more layers (I), other polyamide-containing layers (II) which comprise no, or less than 10 ppm of, nano-scale nucleating agent.

6. Multilayer film according to one or more of Claims 1 to 5, **characterized in that** it comprises one or more adhesion-promoting layers (IV).

7. Multilayer film according to one or more of Claims 1 to 6, **characterized in that** it has, on one outer side, a sealable layer, a sealable layer of multilayer design, or layer sequence (V).

8. Multilayer film according to one or more of Claims 1 to 7, **characterized in that** it has at least one EVOH-containing layer (III).

9. Multilayer film according to one or more of Claims 1 to 8, **characterized in that** it comprises, in addition to the layers (I) and, where appropriate, (II), (III), (IV) and/or (V), one or more other polymeric layers.

10. Film according to one or more of Claims 1 to 9, **characterized in that** layer (I) forms an outer layer of the film.

11. Film according to one or more of Claims 1 to 10, **characterized in that** it has been produced in the form of a blown film.

12. Film according to one or more of Claims 1 to 11, **characterized in that** it has, on one outer side or between individual layers, a metal oxide layer with a thickness of from 5 to 200 nm.

13. Film according to one or more of Claims 1 to 12, **characterized in that** at least one layer (I) has been subjected, after the extrusion process, to a stretching procedure only longitudinally, only transversely, firstly longitudinally and then transversely, simultaneously longitudinally and transversely, or to a combination of these.

14. Use of a single- or multilayer film according to one or more of Claims 1 to 13 for the packaging of food or drink.

## Revendications

1. Film mono- ou multicouche comportant au moins une couche (I) à base d'une composition de polyamide à nanoparticules (P) servant d'agent de nucléation, dispersées dans celle-ci, **caractérisé en ce que** les plus petits composants (B) des particules (P) constituant une unité rigide dans la dispersion présentent en moyenne pondérée en nombre de tous les composants (B) une extension de moins de 100 nm dans au moins une direction pouvant être choisie de façon quelconque pour chaque composant (B) , **en ce que** lors d'un refroidissement de la couche (I) à partir de l'état totalement fondu, à une vitesse de refroidissement comprise entre 10° et 20°C par minute, il se forme des structures cristallines qui partent de la surface des particules (P), **en ce que** la proportion en poids des particules (P), par rapport au poids total de la composition de polyamide constituant la couche (I), est comprise entre 10 ppm et 2000 ppm, et **en ce que** la composition de polyamide constituant la couche (I) est choisie dans le groupe comportant un ou plusieurs homopolyamides et/ou copolyamides, dont au moins un polyamide contient des monomères aromatiques, de sorte que la proportion pondérée en moles des monomères aromatiques, par rapport à la quantité molaire totale de la composition de polyamide, n'est pas inférieure à 3 % et n'est pas supérieure à 15 %, ou dans le groupe comportant un ou plusieurs polyamides aliphatiques qui, sous forme de mélange, présentent un point de fusion, mesuré par ATD (analyse thermique différentielle), n'excédant pas 205°C, à une vitesse de refroidissement de 10 K/min.

2. Film selon la revendication 1, **caractérisé en ce que** la couche (I) contient un polyamide qui est choisi dans le groupe comprenant le polyamide 6/66, des copolyamides partiellement aromatiques présentant une proportion pondérée en moles de monomères aromatiques comprise entre 3 % et 15 % et des mélanges de polyamide 6/66 et/ou de polyamide 6 avec des homopolyamides ou copolyamides partiellement aromatiques qui contiennent une proportion pondérée en moles de monomères aromatiques comprise entre 3 % et 15 %, par rapport à la quantité totale de matière du mélange.

3. Film selon la revendication 1 ou 2, **caractérisé en ce que** les particules utilisées dans la couche (I) comportent des composants (B) qui présentent chacun dans deux directions perpendiculaires entre elles, pouvant être choisies de façon quelconque pour chaque composant (B), une extension d'au moins le décuple de la taille des composants (B) dans la direction ayant la plus faible extension du composant (B).

4. Film selon une ou plusieurs des revendications 1 à 3, **caractérisé en ce que** les particules utilisées dans la couche (I) sont des silicates lamellaires.

5. Film multicouche selon une ou plusieurs des revendications 1 à 4, **caractérisé en ce que**, outre une ou plusieurs couches (I), il comporte également d'autres couches (II) contenant du polyamide, qui ne contiennent pas ou contiennent moins de 10 ppm d'agent de nucléation nanoparticulaire.

6. Film multicouche selon une ou plusieurs des revendications 1 à 5, **caractérisé en ce qu'**il contient une ou plusieurs couches (IV) promouvant l'adhérence.

7. Film multicouche selon une ou plusieurs des revendications 1 à 6, **caractérisé en ce qu'**il comporte sur une face externe une couche de soudage, une couche de soudage de structure multicouche ou une succession de couches (V).

8. Film multicouche selon une ou plusieurs des revendications 1 à 7, **caractérisé en ce qu'**il comporte au moins une couche (III) contenant de l'EVOH.

9. Film multicouche selon une ou plusieurs des revendications 1 à 8, **caractérisé en ce que**, en plus des couches (I) et éventuellement (II), (III), (IV) et/ou (V), il comporte une ou plusieurs autres couches polymères.

10. Film selon une ou plusieurs des revendications 1 à 9, **caractérisé en ce que** la couche (I) constitue une couche externe du film.

11. Film selon une ou plusieurs des revendications 1 à 10, **caractérisé en ce qu'**il a été produit sous forme de feuille soufflée.

12. Film selon une ou plusieurs des revendications 1 à 11, **caractérisé en ce qu'**il comporte sur une face externe ou entre des couches individuelles une couche d'oxyde métallique ayant une épaisseur de 5 nm à 200 nm.

13. Film selon une ou plusieurs des revendications 1 à 12, **caractérisé en ce qu'**au moins la couche (I) a été soumise après l'extrusion à un processus d'étirage seulement dans le sens longitudinal, seulement dans le sens transversal, d'abord dans le sens longitudinal et ensuite dans le sens transversal, simultanément dans le sens longitudinal et dans le sens transversal ou à une combinaison de tels processus.

14. Utilisation d'un film mono- ou multicouche selon une ou plusieurs des revendications 1 à 13, pour le conditionnement de produits alimentaires.
